# FASCICULE DE BREVET EUROPEEN

(11) **EP 1 113 598 B1**
(45) Date de publication et mention de la délivrance du brevet: **19.02.2003**
(21) Numéro de dépôt: 00403065.6
(22) Date de dépôt: 06.11.2000
(51) Int. Cl.: H04B 10/18

(54) **Dispositif de compensation de la dispersion de polarisation dans un système de transmission optique**
Vorrichtung zur Polarisationsdispersionskompensation in einem optischen Übertragungssystem
Polarisation dispersion compensation device in an optical transmission system

(30) Priorité: 30.12.1999 FR 9916721
(43) Date de publication de la demande: 04.07.2001
(73) Titulaire: ALCATEL, 75008 Paris (FR)
(72) Inventeur: Desthieux, Bertrand, 75015 Paris (FR); Ollivier, François-Xavier, 91630 Guibeville (FR); Penninckx, Denis, 91620 Nozay (FR)
(74) Mandataire: Fournier, Michel Robert Marie

(56) Documents cités:
- EP-A- 0 853 395
- EP-A- 0 909 045
- US-A- 5 600 474
- US-A- 5 793 511

## Description

L'invention se situe dans le domaine des transmissions de signaux numériques par des moyens optiques et plus particulièrement des transmissions à haut débit sur des liaisons à longue distance utilisant des fibres optiques.

L'invention concerne un dispositif pour compenser, au moins partiellement, et dynamiquement, la dispersion de polarisation que l'on observe dans les systèmes de transmission à fibre optique.

Un système de transmission à fibre optique comporte typiquement :
- un terminal émetteur utilisant au moins une onde porteuse optique dont il module la puissance et/ou la fréquence optique en fonction de l'information à transmettre,
- une liaison de transmission optique constituée d'au moins une section de fibre monomode acheminant le signal émis par le terminal émetteur,
- et un terminal récepteur recevant le signal optique transmis par la fibre.

La performance d'un système de transmission optique, notamment en termes de qualité de signal et de débit, est limitée notamment par les propriétés optiques de la liaison qui est le siège des phénomènes physiques ayant pour effet de dégrader les signaux optiques. Parmi tous les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent.

L'atténuation dans les fibres d'un type donné dépend de la longueur d'onde de la porteuse du signal. Ainsi, les fibres monomodes installées au cours des dix dernières années, appelées "fibres standard", présentent une atténuation minimum pour une longueur d'onde autour de 1,5 µm, ce qui a conduit à choisir des porteuses autour de cette valeur. En outre, pour augmenter davantage les distances de transmission, l'atténuation a pu être compensée au moyen d'amplificateurs optiques disposés en amont ou en aval ou tout au long de la liaison.

Le problème de la dispersion chromatique est sensible avec les fibres standard (environ 17 ps/(km.nm) à 1,5 µm). Une solution consiste à insérer dans la liaison au moins une fibre dispersive de compensation, appelée "fibre de compensation de dispersion" ou DCF (de l'anglais "Dispersion Compensating Fiber").

Jusqu'à présent, les compensations évoquées ci-dessus faisaient abstraction d'un autre phénomène défavorable appelé "dispersion modale de polarisation". Dans les conditions d'exploitation actuelles des transmissions optiques, ce phénomène a longtemps été considéré comme négligeable par rapport à la dispersion chromatique, mais il ne l'est plus dès que l'on cherche à augmenter toujours davantage les longueurs des liaisons et surtout le débit.

Même en l'absence de dispersion chromatique et bien que l'onde porteuse fournie par une diode laser au niveau de l'émetteur soit totalement polarisée, les fibres sont le siège d'une dispersion de polarisation qui a par exemple pour effet qu'une impulsion émise par le terminal émetteur est reçue déformée après sa propagation dans une fibre et présente une durée supérieure à sa durée originale.

Cette déformation est due à la biréfringence des fibres qui a pour effet que le signal optique se dépolarise pendant la transmission. En première approximation, le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié et arrivant en premier, et d'un second signal impulsionnel se propageant suivant un état de propagation retardé et arrivant avec un retard appelé "retard de groupe différentiel" ou DGD (de l'anglais "Differential Group Delay") qui dépend notamment de la longueur de la fibre de liaison. Ces deux états principaux de polarisation ou PSP (de l'anglais "Principal States of Polarisation") caractérisent donc la liaison.

Par conséquent, si le terminal émetteur émet un signal optique constitué d'une impulsion très brève, le signal optique reçu par le terminal récepteur est constitué de deux impulsions successives polarisées orthogonalement et ayant un décalage temporel égal au DGD. Comme la détection par le terminal consiste à fournir sous forme électrique une mesure de la puissance optique totale reçue, l'impulsion détectée aura une largeur temporelle augmentée en fonction de la valeur du DGD.

Ce retard peut être de l'ordre de 50 picosecondes pour une fibre standard de 100 kilomètres de longueur. La déformation des impulsions reçues par le terminal récepteur peut causer des erreurs de décodage des données transmises, par conséquent la dispersion de polarisation constitue un facteur limitant les performances des liaisons optiques, aussi bien analogiques que numériques.

Actuellement, on sait fabriquer des fibres monomodes à faible dispersion de polarisation (environ 0,05 ps/√km). Cependant, le problème subsiste pour les "fibres standard" installées et qui présentent des dispersions de polarisation très élevées constituant un obstacle technique majeur pour l'augmentation des débits transmis. D'autre part, ce problème réapparaîtra aussi pour les fibres à faible dispersion de polarisation lorsqu'on voudra encore augmenter le débit.

Par ailleurs, on sait réaliser des fibres à forte dispersion de polarisation, appelées aussi fibres à maintien de polarisation ou PMF (de l'anglais "Polarisation Maintaining Fiber"), qui permettent, en utilisant des tronçons de faible longueur, de procurer un retard différentiel fixe avec des états principaux de polarisation invariables. En disposant judicieusement un tel composant (ou tout dispositif générateur de retard différentiel entre deux modes de polarisation orthogonaux) en série avec une liaison de transmission présentant une dispersion de polarisation, on peut réaliser une compensation optique de la dispersion de polarisation. Ceci peut être réalisé soit en utilisant une fibre à maintien de polarisation de même retard différentiel que la liaison, mais en échangeant les états principaux de polarisation lent et rapide, soit en faisant coïncider un état principal de polarisation de l'ensemble constitué par la liaison et la fibre à maintien de polarisation avec l'état de polarisation de la source à l'émission. Pour ce faire, on utilise un contrôleur de polarisation que l'on place entre la liaison et la fibre à maintien de polarisation.

Un aspect important du phénomène de dispersion modale de polarisation est que la valeur du retard différentiel DGD et les états principaux de polarisation d'une liaison varient dans le temps en fonction de nombreux facteurs, tels que les vibrations et la température. Ainsi, contrairement à la dispersion chromatique, la dispersion de polarisation doit être considérée comme un phénomène aléatoire. En particulier, on caractérisera la dispersion de polarisation d'une liaison par une valeur dite "PMD" (de l'anglais "Polarisation Mode Dispersion Delay") définie comme la valeur moyenne de DGD mesuré.

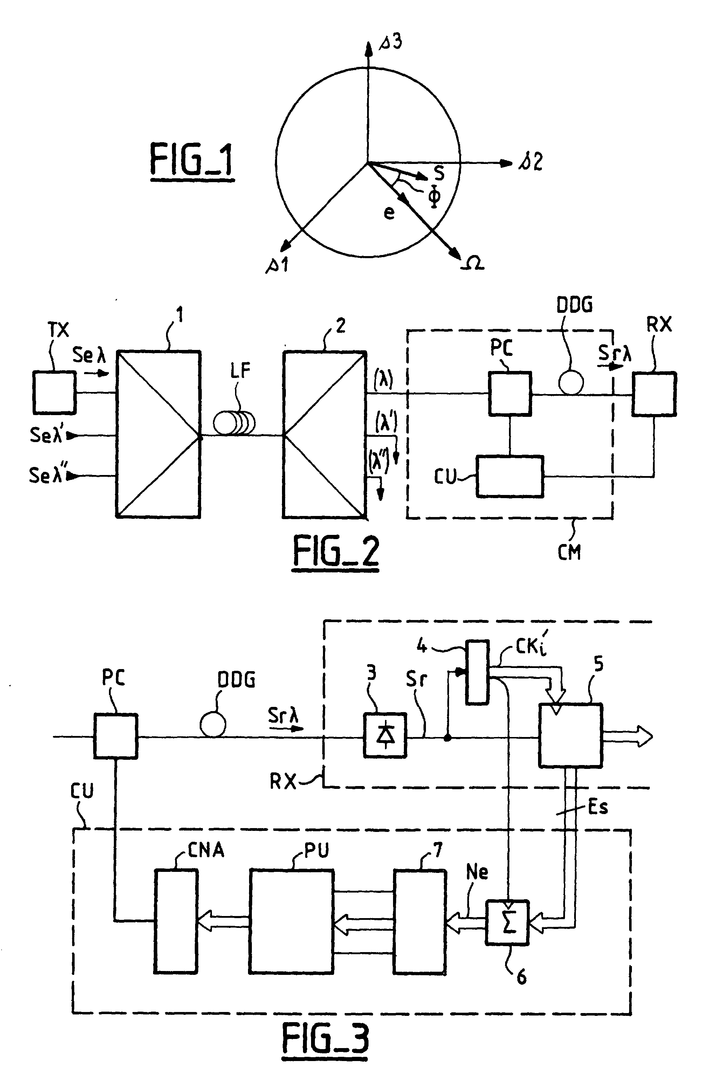

Plus précisément, on montre que la dispersion de polarisation peut être représentée par un vecteur de rotation aléatoire Q dans l'espace de Poincaré où l'on représente habituellement les états de polarisation par un vecteur d'état de polarisation **S**, dit vecteur de Stokes, dont l'extrémité est située sur une sphère. La figure 1 montre les principaux vecteurs impliqués : le vecteur d'état de polarisation **S**, le vecteur de dispersion de polarisation Ω et le vecteur des états principaux de polarisation **e**. Φ est l'angle entre **S** et Ω.

Les vecteurs **e** et Ω ont la même direction et on a la relation : ∂**S**/∂ω = Ω⊗**S**, où ω est la pulsation de l'onde optique, le symbole ⊗ désignant le produit vectoriel.

Le module de Ω est la valeur de la différence de temps de groupe, c'est-à-dire du retard de propagation entre deux ondes polarisées selon les deux états principaux de polarisation de la liaison.

Une conséquence de ce caractère aléatoire est qu'un dispositif de compensation doit être adaptatif et le retard différentiel de la fibre à maintien de polarisation choisi de façon à être au moins égal aux valeurs maximales de retard différentiel que l'on veut compenser. Idéalement, la compensation doit viser à ce que la direction des états principaux de polarisation **e** de l'ensemble de liaison compris entre le signal émis et le signal reçu coïncide en permanence avec la direction du vecteur de polarisation **S** du signal reçu. En d'autres termes, l'angle Φ défini précédemment devrait être maintenu aussi petit que possible

Un dispositif de compensation de cette dispersion modale de polarisation est décrit dans la demande de brevet européen EP-A-853 395 déposée le 30 décembre 1997 et publiée le 15 juillet 1998. Le dispositif est disposé en amont du récepteur et comprend :
- au moins un contrôleur de polarisation,
- des moyens pour engendrer un retard différentiel entre deux modes de polarisation orthogonaux, et
- des moyens d'asservissement du contrôleur de polarisation.

Selon une réalisation décrite dans ce document, les moyens d'asservissement sont prévus pour maximiser le degré de polarisation du signal issu du dispositif à retard différentiel, lequel est typiquement constitué d'une fibre à maintien de polarisation.

D'autres méthodes d'asservissement connues visent à minimiser la largeur spectrale de la modulation du signal électrique obtenu par détection du signal optique issu du dispositif à retard différentiel DDG. On pourrait aussi utiliser comme paramètre de mesure le produit pondéré des deux paramètres précédents, c'est-à-dire un paramètre p de la forme DOP^{x}.Δω^{y}, où DOP est le degré de polarisation, Δω la largeur spectrale, x et y des coefficients de pondération optimisés pour le système de transmission concerné.

La réalisation pratique de l'ensemble de la boucle d'asservissement doit présenter des performances adaptées au problème de la PMD. En particulier son temps de réponse doit être compatible avec la rapidité des fluctuations de DGD observées en pratique. De plus, elle doit assurer une précision d'autant plus grande que le niveau de l'amélioration recherché est élevé. Cette condition sur la précision peut s'exprimer en disant que l'angle Φ entre la direction **e** des états principaux de polarisation de l'ensemble de liaison compris entre le signal émis et le signal reçu, et la direction du vecteur de polarisation **S** du signal reçu reste à tout instant inférieure à une valeur donnée permettant l'amélioration requise.

Expérimentalement, on a trouvé que cet angle Φ devait en général rester inférieur à 10 degrés et de préférence inférieur à 3 degrés.

Sachant que le vecteur de polarisation **S** peut effectuer jusqu'à 50 rotations par seconde, on peut en déduire le temps de réponse maximal à imposer à la boucle d'asservissement, selon la qualité de signal souhaité. Dans le cas général, si Nm est le nombre maximum de rotations par seconde du vecteur de polarisation **S** et Φm la valeur maximale en degrés imposée à l'angle Φ, le temps de réponse maximal en secondes sera tr = Φm/(Nm.360).

Ainsi, pour Nm = 50 et Φm = 10°, le temps de réponse maximal tr sera 0,55 ms.

Compte tenu de ces contraintes, outre le choix du paramètre de mesure, les performances des dispositifs de mesure, de traitement de signal et d'actionnement (contrôleur de polarisation) sont critiques à l'égard de l'efficacité de la compensation.

D'un point de vue théorique, un des meilleurs choix comme paramètre de mesure semble être le degré de polarisation mentionné ci-dessus car il y a une excellente corrélation entre ce paramètre et la dégradation du taux d'erreur dû à la PMD. De plus sa mesure peut s'effectuer rapidement au moyen de composants optiques et de circuits électroniques spécifiques. Par contre cette solution est coûteuse à mettre en oeuvre correctement.

La largeur spectrale de la modulation du signal électrique est relativement moins coûteuse à mesurer car elle s'effectue uniquement au niveau de la partie électronique du récepteur, mais c'est un paramètre pas toujours bien corrélé avec la PMD, ce qui donne parfois de moins bons résultats.

L'invention a pour but de réduire le coût de fabrication d'un dispositif de compensation de PMD en exploitant le fait que la plupart des systèmes de transmission optique numérique appliquent des méthodes de détection et de correction d'erreurs.

Dans ce but, l'invention a pour objet un dispositif de compensation pour système de transmission optique numérique comportant un terminal émetteur émettant des données sous la forme d'un signal optique polarisé, une fibre optique de transmission, éventuellement des amplificateurs optiques et un terminal récepteur, ce dispositif comportant des moyens de compensation de la dispersion de polarisation comprenant :
- au moins un contrôleur de polarisation,
- des moyens pour engendrer un retard différentiel entre deux modes de polarisation orthogonaux, ce contrôleur et ces moyens étant intercalés entre la fibre de transmission et le terminal récepteur dans cet ordre,
- et des moyens d'asservissement pour commander le contrôleur de polarisation,
caractérisé en ce que lesdites données émises étant constituées de trames comportant chacune des données redondantes générées par le terminal émetteur permettant au terminal récepteur de détecter des erreurs affectant les trames reçues, lesdits moyens d'asservissement sont prévus pour minimiser le taux d'erreur calculé en temps réel au moyen desdites données redondantes.

Plusieurs considérations sont à la base de l'invention. La première est l'idée que si le taux d'erreur instantané pouvait être mesuré, il constituerait un bon paramètre pour l'asservissement. En effet, bien que les erreurs de transmission détectées au niveau d'un récepteur puissent avoir de nombreuses causes autres que la PMD, il s'avère que la PMD est en pratique la seule perturbation qui présente des fluctuations ayant la rapidité indiquée ci-dessus. On peut donc en déduire que les fluctuations à haute fréquence du taux d'erreur instantané sont dues uniquement à la PMD. Par conséquent, si on peut réaliser un asservissement fondé sur une optimisation du taux d'erreur instantané, tout en ayant un temps de réponse suffisamment court pour répondre aux contraintes de la PMD, la compensation résultante ne devraient prendre en compte que les effets la PMD.

La mise en oeuvre de cette idée soulève toutefois le problème qu'en toute rigueur une mesure directe d'un taux d'erreur ne peut pas être instantanée puisqu'elle implique la réception d'un nombre suffisant de données pour établir une mesure statistique significative.

Une autre considération est la constatation que les méthodes de détection et de correction d'erreurs usuelles et/ou normalisées permettent de calculer directement les taux d'erreur portant sur des blocs de données successifs. Les résultats de ces calculs constituent alors une mesure échantillonnée du taux d'erreur instantané d'autant plus significative que le nombre de données constituant chaque bloc est élevé. Enfin, pour une taille de bloc fixée par le code détecteur et/ou correcteur choisi, le retard de la mesure est d'autant plus faible que le débit de transmission est élevé. En effet, les données émises sont organisées en trames comportant chacune des données redondantes permettant au terminal récepteur de détecter des erreurs affectant les trames reçues. Un taux d'erreur ne peut être mesuré qu'après réception d'au moins une trame complète, c'est-à-dire d'un nombre de bits fixé par le format de la trame. Si à faible débit le temps nécessaire à la réception d'une trame peut être trop long pour permettre une réponse suffisamment rapide de l'asservissement, à fort débit la situation devient plus favorable.

Par exemple, dans le cas du code correcteur d'erreurs défini par la recommandation G.975 de l'ITU-T pour les systèmes de transmission sous-marins, la trame est constituée de 32640 bits. Avec un débit de 10 mégabits par seconde, le temps de lecture d'une trame est de 3 ms, mais avec un débit 10 gigabits par seconde, ce temps passe à 3µs seulement. Ce retard est à comparer au temps de réponse de 0,55 ms mentionné précédemment pour l'asservissement.

Par ailleurs, le nombre d'erreurs détectées par trame peut s'annuler lorsque la qualité du signal compensé augmente. Le taux d'erreur ne peut plus alors servir de base à une évaluation de la qualité du signal. Il en résulte que l'algorithme d'optimisation de l'asservissement ne contribue plus à son amélioration par la compensation de PMD. Aussi, on prévoira avantageusement que le calcul de taux d'erreur puisse être effectué à partir de nombres d'erreurs affectant plusieurs trames successives reçues.

On peut toutefois noter que l'inefficacité éventuelle de l'asservissement dans les conditions de très faible taux d'erreur n'est pas dommageable si le code utilisé est un code correcteur d'erreurs car un faible nombre d'erreurs peut normalement être corrigé. Cependant, même dans le cas d'un code correcteur, il peut être utile de calculer le taux à partir de plusieurs trames successives car cela permet de fournir à l'algorithme une mesure de taux d'erreur présentant des discontinuités à amplitudes limitées. De plus, l'asservissement est maintenu actif pour compenser aussi des dérives de PMD beaucoup plus lentes que les fluctuations rapides évoquées précédemment.

Le nombre de ces trames successives sera avantageusement choisi en tenant compte du temps de réponse maximal que l'asservissement doit respecter pour permettre une compensation efficace de la PMD. Ce nombre sera donc fonction de ce temps de réponse maximal, de la longueur des trames, du débit de transmission et des temps de réponse des autres éléments de l'asservissement, en particulier de l'algorithme d'optimisation.

Ainsi, d'une façon générale, et selon un aspect particulier de l'invention, le nombre de ces trames successives est tel que les moyens d'asservissement présentent un temps de réponse et une précision pour que l'angle entre la direction des états principaux de polarisation de l'ensemble de liaison compris entre le signal émis et le signal reçu, et la direction du vecteur de polarisation du signal reçu reste à tout instant inférieur à 10 degrés et de préférence inférieur à 3 degrés.

L'invention a aussi pour objet un système de transmission optique incorporant le dispositif de compensation défini ci-dessus. Le système peut être monocanal, c'est-à-dire prévu pour véhiculer un signal porté par une seule longueur d'onde ou à multiplexage en longueur d'onde ("WDM"), c'est-à-dire pour véhiculer un signal composé de plusieurs canaux portés par des longueurs d'onde différentes. Dans ce dernier cas, il convient d'appliquer pour chacun des canaux une compensation spécifique. Pour cela, le dispositif selon l'invention comporte des moyens pour extraire en réception au moins l'un des canaux et au moins un dispositif de compensation associé à ce canal.

D'autres aspects et avantages de l'invention apparaîtront dans la suite de la description en référence aux figures.
- La figure 1 représente l'espace de Poincaré déjà commenté précédemment.
- La figure 2 représente schématiquement un système de transmission optique comportant le dispositif de compensation selon l'invention.
- La figure 3 montre plus en détail les moyens d'asservissement du dispositif de compensation selon l'invention.
- La figure 4 montre un exemple de codeur servant à constituer les trames émises comportant les données d'information et les données redondantes de détection et de correction d'erreurs.
- La figure 5 représente des chronogrammes de signaux d'horloge du codeur de la figure 4.
- La figure 6 montre un exemple correspondant de décodeur du récepteur et les moyens supplémentaires pour mettre en oeuvre l'invention.

La figure 2 montre schématiquement et à titre d'exemple un système de transmission optique muni du dispositif de compensation selon l'invention.

L'exemple représenté est un système à multiplexage en longueur d'onde prévu pour véhiculer plusieurs canaux Seλ, Seλ', Seλ" portés respectivement par les longueurs d'onde λ, λ', λ". Chaque canal, par exemple Seλ, est issu d'un terminal émetteur TX émettant un signal optique ayant la forme d'une modulation d'amplitude (et/ou de fréquence optique) d'une onde porteuse polarisée. Les canaux sont combinés dans un multiplexeur 1 dont la sortie est couplée à une liaison optique de transmission. Cette liaison est typiquement constituée d'une fibre optique LF et peut comporter des amplificateurs optiques (non représentés) disposés en amont et/ou en aval de la fibre. La liaison peut aussi être composée de plusieurs sections de fibre entre lesquels sont placés des amplificateurs optiques.

L'extrémité de la liaison rejoint au moins un terminal récepteur, par exemple RX, par l'intermédiaire d'un démultiplexeur 2 ayant pour fonction d'extraire le canal Srλ destiné au récepteur RX.

Le système comporte des moyens de compensation de la dispersion de polarisation CM disposés entre le démultiplexeur 2 et le récepteur RX, et comprenant :
- au moins un contrôleur de polarisation PC,
- des moyens DDG pour engendrer un retard différentiel entre deux modes de polarisation orthogonaux,
- et des moyens d'asservissement CU du contrôleur de polarisation PC.

Le dispositif à retard différentiel DDG est par exemple constitué d'une fibre à maintien de polarisation. Les moyens d'asservissement CU sont prévus pour minimiser le taux d'erreur calculé à partir du nombre d'erreurs détectées par le décodeur du récepteur RX.

Le cas d'un système monocanal se distingue du cas précédent par l'absence du multiplexeur 1 et du démultiplexeur 2.

La figure 3 montre plus en détail la partie du récepteur utile pour la mise en ouvre de l'invention et les moyens d'asservissement CU du dispositif de compensation.

Dans le récepteur, on trouve un détecteur 3, tel qu'une photodiode, réalisant la conversion du signal optique Srλ issu du dispositif à retard différentiel DDG en un signal électrique Sr. Ce signal Sr est reçu par un circuit de récupération d'horloge 4 et par un décodeur 5. Le circuit 4 fournit au décodeur 5 les signaux d'horloge CKi' nécessaires au traitement synchrone du signal Sr.

De façon classique pour les codes détecteurs et correcteurs d'erreurs, le décodeur 5 calcule pour chaque trame reçue une pluralité de syndromes d'erreurs représentatifs du nombre et des emplacements des erreurs détectées dans cette trame. En fonction de ces syndromes, le décodeur 5 détermine les corrections à effectuer, dans la mesure où le nombre d'erreurs ne dépasse pas la capacité de correction du code. Le décodeur détermine également le nombre d'erreurs affectant chaque trame.

Selon une réalisation particulière utilisant un entrelacement de plusieurs codages, par exemple de type Reed-Solomon, le décodeur comporte plusieurs décodeurs élémentaires fournissant plusieurs nombres d'erreurs Es correspondants. Les moyens d'asservissement CU comportent alors des moyens d'addition 6 disposés pour recevoir ces nombres et en calculer la somme. Cette somme Ne est transmise sous la forme d'un nombre binaire à un calculateur PU par l'intermédiaire d'un circuit d'interface 7.

Les sorties du calculateur PU commandent le contrôleur de polarisation PC par l'intermédiaire d'un convertisseur numérique-analogique CNA.

Le calculateur PU est programmé pour exécuter un algorithme d'optimisation visant à déterminer les commandes à appliquer au contrôleur de polarisation PC pour que le taux d'erreur mesuré soit maintenu à une valeur minimum.

Les nombres d'erreurs Ne successifs reçus par le calculateur PU l'informe du taux d'erreur. L'estimation du taux d'erreur qu'en fait le calculateur peut ainsi être réactualisée après chaque trame reçue et constituer une mesure échantillonnée en temps réel du taux d'erreur instantané.

Pour l'exécution de l'algorithme d'optimisation, le calculateur peut simplement utiliser comme paramètre à optimiser le nombre d'erreurs Ne détectées dans chaque trame. Cette solution assure le meilleur temps de réponse de l'asservissement.

Cependant, pour les raisons indiquées précédemment, un paramètre mieux adapté pourrait être le cumul des nombres d'erreurs affectant plusieurs trames successives reçues. Ce mode de fonctionnement peut être programmé pour s'exécuter automatiquement, par exemple lorsque le nombre d'erreurs détectées par trame devient inférieur à une valeur déterminée.

L'algorithme d'optimisation est de type multidimensionnel de façon à piloter au moins deux grandeurs d'ajustement du contrôleur de polarisation. Il existe de nombreux algorithmes de ce type et on pourra par exemple utiliser un algorithme conçu pour mettre en ouvre la méthode dite de Powell, telle que décrite aux pages 412 à 420 du manuel intitulé "Numerical Recipes in C" par William H. Press et al, Cambridge University Press, 1994.

Les performances de l'ensemble de la boucle d'asservissement doivent être adaptées au problème de la PMD. En particulier son temps de réponse doit être compatible avec la rapidité des fluctuations de PMD observées en pratique. De plus, elle doit présenter une précision suffisante pour que l'angle Φ entre la direction **e** des états principaux de polarisation de l'ensemble de liaison compris entre le signal émis Seλ et le signal reçu Srλ, et la direction du vecteur de polarisation **S** du signal reçu Srλ reste à tout instant inférieure à une valeur donnée permettant l'amélioration souhaitée de la qualité du signal.

Expérimentalement, on a trouvé que cet angle devait en général rester inférieur à 10 degrés et de préférence inférieur à 3 degrés.

Sachant que le vecteur de polarisation **S** peut effectuer jusqu'à 50 rotations par seconde, on peut en déduire le temps de réponse minimal à imposer à la boucle d'asservissement, selon la qualité de signal souhaitée. En pratique, il convient par exemple d'avoir un temps de réponse inférieur à une milliseconde.

Pour illustrer un mode de réalisation préféré, nous allons décrire comment l'invention peut être mise en ouvre dans le cas du code intitulé "Forward error correction for submarine systems" faisant l'objet de la norme ITU-T, recommandation G.975. Pour des raisons de concision, nous ne décrirons cependant pas tous les détails contenus dans cette norme.

Il est rappelé que le code correcteur d'erreur utilise une pluralité de codes Reed-Solomon entrelacés. Chacun de ces codes Reed-Solomon porte sur des symboles de 8 bits et est de type RS(255,239), c'est-à-dire organisé en mots de code constitués de 255 octets, dont 239 sont des octets d'information et 16 des octets redondants. Le code RS(255,239) permet de générer 16 syndromes d'erreur et de corriger 8 octets simultanément en erreur dans chaque mot de code de 255 octets.

L'entrelacement et une conversion parallèle-série forment alors des trames. Le nombre de codes RS(255,239) entrelacés est par exemple 16, ce qui permet de corriger jusqu'à 1024 bits en erreur dans chaque trame de 32640 bits.

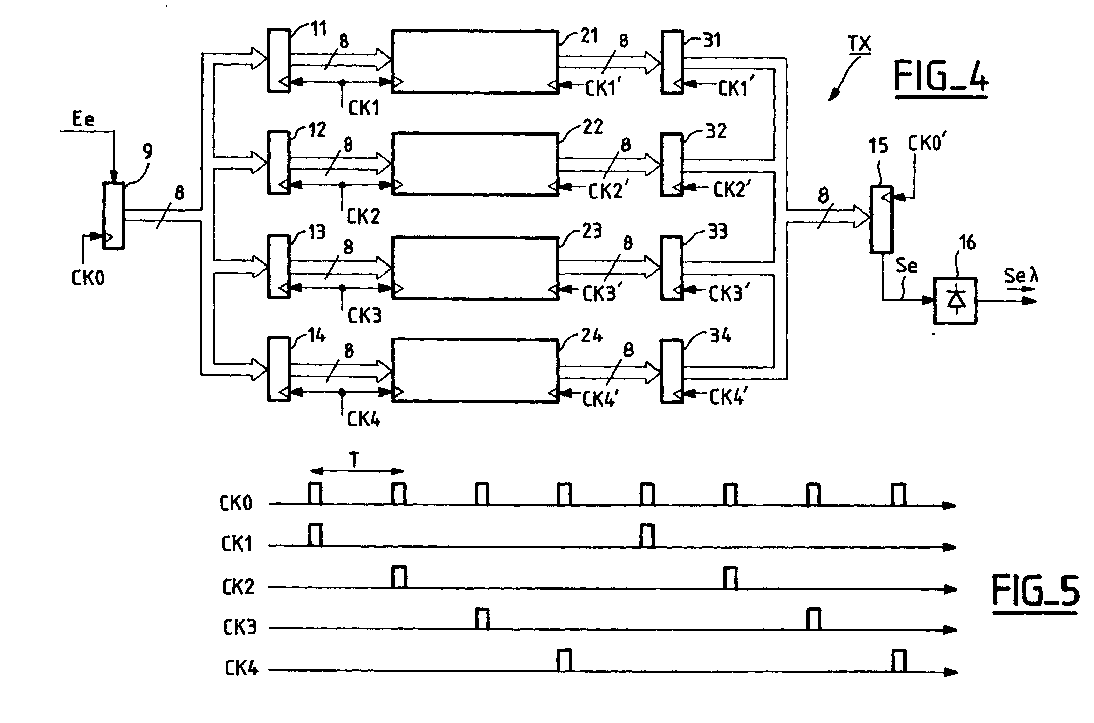

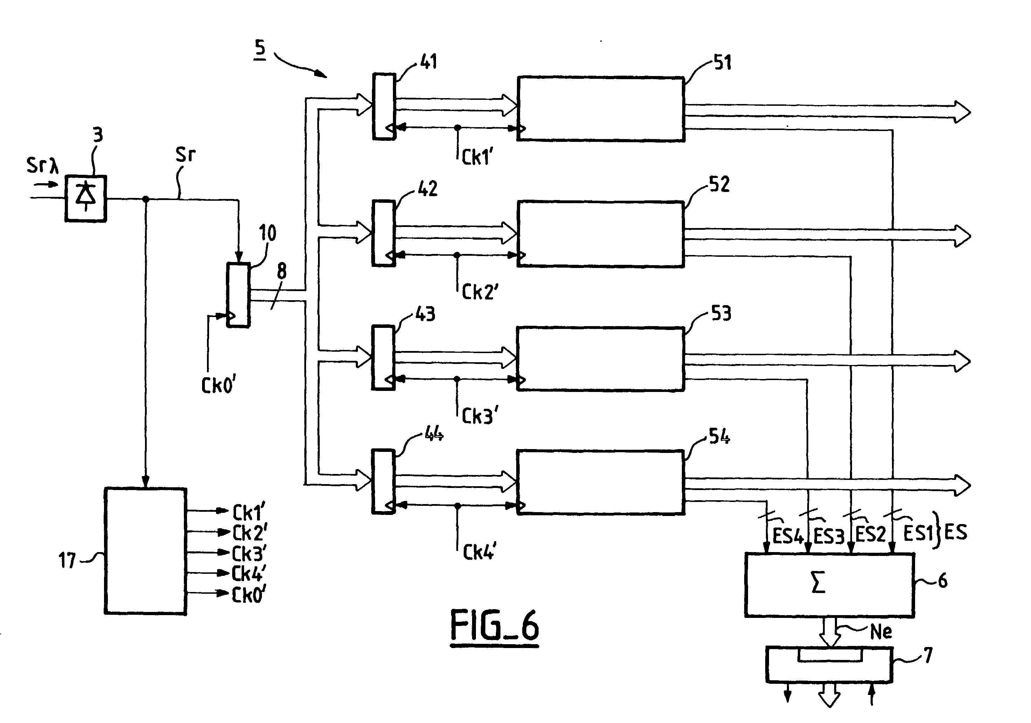

A titre d'illustration, la figure 4 montre un schéma de principe de la partie codeur de l'émetteur TX. Pour simplifier l'exposé, on a montré seulement le cas de 4 codes RS(255,239) entrelacés. La figure 5 représente des chronogrammes de signaux d'horloge commandant le codeur.

Les données d'information à transmettre sont supposées être initialement des données binaires en série sous forme d'un signal électrique Ee. Elles sont synchronisées au rythme d'un signal d'horloge CK0 représenté à la figure 5, dont la période T correspond au temps bit du signal série Ee.

Le signal série Ee passe d'abord dans un organe de conversion série-parallèle de façon à former des octets. Cet organe 9 est typiquement constitué d'un registre à décalage d'une capacité de 8 bits, recevant sur son entrée série le signal Ee et commandé en décalage par l'horloge CK0.

La sortie parallèle du registre à décalage 9 est reliée à chacune des entrées de quatre registres de 8 bits 11 à 14. Les validations d'écriture dans ces registres sont commandée respectivement par les signaux d'horloge CK1 à CK4 représenté à la figure 5. Ces signaux d'horloge ont chacun une période de 4T et trois d'entre eux présentent par rapport au quatrième des décalages temporels respectivement de T, 2T, 3T.

Les sorties des registres 11 à 14 sont respectivement reliés aux entrées de codeurs RS(255,239) 21 à 24. Les codeurs sont synchronisés en écriture respectivement par les signaux d'horloge CK1 à CK4 et synchronisés en lecture respectivement par des signaux d'horloge CK1' à CK4' analogues au signaux CK1 à CK4 mais présentant une fréquence plus élevée de façon à augmenter le débit de sortie pour compenser l'introduction des données redondantes engendrées dans ces codeurs.

Les sorties des codeurs 21 à 24 sont reliés à des registres tampons de sortie 31 à 34 dont les validations de lecture sont commandées respectivement par les signaux d'horloge CK1' à CK4'.

Les sorties des registres 31 à 34 sont chacune reliées à l'entrée parallèle d'un registre à décalage de sortie 15, commandé en décalage par une horloge CK0' de fréquence quadruple de celle des signaux CK1' à CK4'. La sortie série du registre 15 délivre le signal série Se qui est ensuite converti en signal optique Seλ par un convertisseur électrooptique 16. Le signal Seλ, après une éventuelle amplification, est ensuite couplé à la fibre de transmission.

La figure 6 montre un exemple correspondant de décodeur du récepteur et les moyens supplémentaires pour mettre en oeuvre l'invention.

Le signal optique reçu après transmission Srλ est d'abord converti sous la forme d'un signal électrique série Sr au moyen d'un photodétecteur 3. Le signal Sr est délivré à un circuit 17 de récupération d'horloge conçu pour engendrer au niveau du récepteur les signaux d'horloge CK0' à CK4' définis précédemment. Le signal Sr est d'autre part appliqué à l'entrée d'un registre à décalage 10 d'une capacité de 8 bits et commandé en décalage par l'horloge CK0'.

La sortie parallèle du registre à décalage 10 est reliée à chacune des entrées de quatre registres de 8 bits 41 à 44 dont les écritures sont validées respectivement par les signaux d'horloge CK1' à CK4'. Les registres 10 et 41 à 44 réalisent ainsi les opérations de conversion série-parallèle et de désentrelacement des trames reçues.

Les sorties des registres 41 à 44 sont respectivement reliés aux entrées de décodeurs RS(255,239) 51 à 54. Les décodeurs sont synchronisés en écriture respectivement par les signaux d'horloge CK1' à CK4'.

Les décodeurs 51 à 54 délivrent les signaux Es1 à Es4 représentatifs respectivement des nombres d'erreurs qu'ils ont respectivement détectés dans la dernière trame reçue et décodée. Ces signaux Es1 à Es4 qui ont chacun le format d'un nombre binaire sont appliqués à l'entrée de l'additionneur 6 apte à générer le signal Ne représentatif de leur somme.

Le signal Ne est alors transmis au calculateur PU par l'intermédiaire de l'interface de liaison 7.

Les codeurs et décodeurs de type Reed-Solomon sont bien connus en soi et ne seront donc pas décrits plus en détail. Pour leurs réalisation, on pourra par exemple consulter le manuel intitulé "Error control coding" par SHU LIN et Daniel J. COSTELLO, JR, 1983, édité par Prentice-Hall.

## Revendications

1. Dispositif de compensation pour système de transmission optique numérique comportant un terminal émetteur (TX) émettant des données sous la forme d'un signal optique polarisé (Seλ), une fibre optique de transmission (LF), éventuellement des amplificateurs optiques et un terminal récepteur (RX), ce dispositif comportant des moyens de compensation de la dispersion de polarisation comprenant :
- au moins un contrôleur de polarisation (PC),
- des moyens (DDG) pour engendrer un retard différentiel entre deux modes de polarisation orthogonaux, ce contrôleur et ces moyens étant intercalés entre la fibre de transmission et le terminal récepteur dans cet ordre,
- et des moyens d'asservissement (CU) pour commander le contrôleur de polarisation (PC),
**caractérisé en ce que** lesdites données émises étant constituées de trames comportant chacune des données redondantes générées par le terminal émetteur (TX) permettant au terminal récepteur (RX) de détecter des erreurs affectant les trames reçues, lesdits moyens d'asservissement (CU) sont prévus pour minimiser le taux d'erreur calculé en temps réel au moyen desdites données redondantes.

2. Dispositif de compensation selon la revendication 1, **caractérisé en ce que** lesdits moyens d'asservissement (CU) sont prévus pour que ledit calcul de taux d'erreur soit effectué à partir de nombres d'erreurs affectant plusieurs trames successives reçues.

3. Dispositif de compensation selon la revendication 2
**caractérisé en ce que** le nombre desdites trames successives reçues est tel que les moyens d'asservissement présentent un temps de réponse et une précision pour que l'angle (Φ) entre la direction (**e**) des états principaux de polarisation de l'ensemble de liaison compris entre le signal émis (Seλ) et le signal reçu (Srλ), et la direction du vecteur de polarisation (**S**) du signal reçu (Srλ) reste à tout instant inférieur à 10 degrés.

4. Dispositif de compensation selon la revendication 3, **caractérisé en ce que** ledit nombre de trames successives est tel que ledit angle (Φ) reste inférieur à 3 degrés.

5. Système de transmission optique, **caractérisé en ce qu'**il comporte un dispositif de compensation selon l'une des revendications 1 à 4.

6. Système de transmission optique pour signal à plusieurs canaux multiplexés en longueurs d'onde (Seλ, Seλ', Seλ"), **caractérisé en ce qu'**il comporte des moyens (2) pour extraire en réception au moins l'un desdits canaux (Srλ) et au moins un dispositif de compensation (CM) associé audit canal extrait et conforme à l'une des revendications 1 à 4.

## Patentansprüche

1. Kompensationsvorrichtung für ein digitales optisches Übertragungssystem mit einem Senderendgerät (TX), das Daten in Form eines polarisierten optischen Signals (Seλ) sendet, einer optischen Übertragungsfaser (LF), ggf. optischen Verstärkern und einem Empfängerendgerät (RX), wobei die Vorrichtung Mittel zum Kompensieren der Polarisationsdispersion aufweist, mit:
- wenigstens einem Polarisationscontroller (PC),
- Mitteln (DDG) zum Erzeugen einer differenziellen Verzögerung zwischen zwei orthogonalen Polarisationsmoden, wobei dieser Controller und diese Mittel zwischen die Übertragungsfaser und das Empfängerendgerät in dieser Reihenfolge eingefügt sind,
- und Regelungsmitteln (CU) zum Steuern des Polarisationscontrollers (PC),
**dadurch gekennzeichnet, dass**, da die gesendeten Daten aus Rahmen gebildet sind, die jeweils vom Sender-Endgerät (TX) erzeugte redundante Daten aufweisen, die es dem Empfängerendgerät (RX) ermöglichen, die empfangenen Rahmen betreffende Fehler zu erfassen, die Regelungsmittel (CU) vorgesehen sind, um die anhand der redundanten Daten in Echtzeit berechnete Fehlerrate zu minimieren.

2. Kompensationsvorrichtung nach Anspruch 1, **dadurch gekennzeichnet, dass** die Regelungsmittel (CU) so vorgesehen sind, dass die Berechnung der Fehlerrate anhand der Zahlen von mehrere aufeinanderfolgende empfangene Rahmen betreffenden Fehlern berechnet wird.

3. Kompensationsvorrichtung nach Anspruch 2, **dadurch gekennzeichnet, dass** die Zahl der aufeinanderfolgenden empfangenen Rahmen derart ist, dass die Regelungsmittel eine solche Reaktionszeit und Genauigkeit aufweisen, dass der Winkel (Φ) zwischen der Richtung (e) der Hauptpolarisationszustände der gesamten Verbindung zwischen dem gesendeten Signal (Sel) und dem empfangenen Signal (Srλ) und die Richtung des Polarisationsvektors (S) des empfangenen Signals (Srλ) jederzeit kleiner als 10° bleibt.

4. Kompensationsvorrichtung nach Anspruch 3, **dadurch gekennzeichnet, dass** die Zahl der aufeinanderfolgenden Rahmen derart ist, dass der Winkel (Φ) kleiner als 3° bleibt.

5. Optisches Übertragungssystem, **gekennzeichnet durch** eine Kompensationsvorrichtung nach einem der Ansprüche 1 bis 4.

6. Optisches Übertragungssystem für ein Signal mit mehreren wellenlängengemultiplexten Kanälen (Seλ, Seλ', Seλ"), **dadurch gekennzeichnet, dass** es Mittel (2) zum Extrahieren wenigstens eines der Kanäle (Srλ) am Empfang und wenigstens eine dem Kanal zugeordnete Kompensationsvorrichtung (CM) nach einem der Ansprüche 1 bis 4 umfasst.

## Claims

1. A compensator device for a digital optical transmission system including a transmit terminal (TX) for sending data in the form of a polarized optical signal (Seλ), a transmit optical fiber (LF), optional optical amplifiers and a receive terminal (RX), said device including means for compensating polarization dispersion including:
- at least one polarization controller (PC),
- means (DDG) for generating a differential group delay between two orthogonal modes of polarization, said means and said controller being interleaved between the transmit fiber and the receive terminal, in that order, and
- a control unit (CU) for controlling the polarization controller (PC),
**characterized in that** the data that is transmitted consists of frames each including redundant data generated by the transmit terminal (TX) to enable the receive terminal (RX) to detect errors affecting the received frames and said control unit (CU) is adapted to minimize the error rate calculated in real time using said redundant data.

2. A compensator device according to claim 1, **characterized in that** said control unit (CU) calculates said error rate on the basis of numbers of errors affecting a plurality of successive received frames.

3. A compensator device according to claim 2, **characterized in that** the number of successive received frames is such that the control unit has a response time and an accuracy such that the angle (Φ) between the direction (**e**) of the principal states of polarization of the line as a whole, between the sent signal (Seλ) and the received signal (Srλ), and the direction of the polarization vector (**S**) of the received signal (Srλ) remains at all times less than 10°.

4. A compensator device according to claim 3, **characterized in that** said number of successive frames is such that said angle (Φ) remains less than 3°.

5. An optical transmission system, **characterized in that** it includes a compensator device according to any one of claims 1 to 4.

6. An optical transmission system for a signal with a plurality of wavelength division multiplexed channels (Seλ, Seλ', Seλ"), **characterized in that** it includes means (2) for extracting in the receiver at least one of said channels (Srλ) and compensating means (CM) associated with said extracted channel and conforming to any one of claims 1 to 4.
